# EUROPÄISCHE PATENTSCHRIFT

(11) **EP 0 331 066 B1**
(45) Veröffentlichungstag und Bekanntmachung des Hinweises auf die Patenterteilung: **08.12.1993**
(21) Anmeldenummer: 89103381.3
(22) Anmeldetag: 27.02.1989
(51) Int. Cl.: C08F 267/10, D21H 17/42

(54) **Polymerisate**
Polymers
Polymérisat

(30) Priorität: 04.03.1988 DE 3807097
(43) Veröffentlichungstag der Anmeldung: 06.09.1989
(73) Patentinhaber: BAYER AG, 51368 Leverkusen (DE)
(72) Erfinder: Sackmann, Günter, Dr., D-5090 Leverkusen 3 (DE); König, Joachim, Dr., D-5068 Odenthal (DE); Bäumgen, Heinz, D-5090 Leverkusen (DE)

(56) Entgegenhaltungen:
- DE-A- 1 720 679
- US-A- 4 317 893

## Beschreibung

Die Erfindung betrifft Polymerisate und ihre Verwendung, insbesondere zur Oberflächenleimung von Papier oder papierähnlichen Materialien.

Bisher gibt es schon eine ganze Reihe gut wirksamer anionischer Oberflächenleimungsmittel für Papier, die sowohl als wäßriger Lösungen als auch in Form von wäßrigen Emulsionen zum Einsatz gelangen. Die meisten der bisher bekannten Produkte besitzen einen stark anionischen Charakter und sind deshalb in ihrem Anwendungsbereich bis zu einem bestimmten Grad eingeschränkt. Sie benötigen zur Entfaltung ihrer vollen Leimungswirkung die Anwesenheit von Al-Ionen im Rohpapier, d.h. sie sind in erster Linie auf Papiersorten einsetzbar, die bei sauren pH-Werten hergestellt werden. Als Beispiele für solche Papiersorten seien alaunhaltige oder vorgeleimte genannt, die in der Regel Clay als Füllstoff enthalten. Nachteilig ist jedoch, daß sie auf alaunfreien und kreidehaltigen Papieren nur eine geringe oder aber in vielen Fällen gar keine Leimung zeigen. Da in letzter Zeit ein Trend bei der Papierherstellung in Richtung Neutralfahrweise unter Einsatz von Kreide als Füllstoff zu beobachten ist, ist es heute für ein Papierleimungsmittel wichtig, daß es auf allen gängigen Papiersorten eingesetzt wrden kann und dort auch eine gleichmäßig gute Leimungswirkung zeigt. Ein Oberflächenleimungsmittel für Papier, das alle möglichen Herstellungsbedingungen abdeckt, unter denen heute Papier produziert wird, wäre deshalb sowohl technisch als auch wirtschaftlich von sehr großem Interesse.

Wünschenswert wäre deshalb die Herstellung eines Leimungsmittels, das sowohl im sauren pH-Bereich bei alaunhaltigen und vorgeleimten Papieren als auch im neutralen bis schwach alkalischen pH-Bereich bei alaunfreien und kreidehaltigen Papieren eingesetzt werden kann. Zusätzlich sollte mit einem solchen Leimungsmittel auch die Leimung von holzhaltigen Papieren zu guten Ergebnissen führen.

Eine Aufgabe der vorliegenden Erfindung ist es somit, Leimungsmittel für Papier bereitzustellen, die ein breiteres Anwendungsspektrum als die bisher verwendeten anionischen Produkte haben, und die sowohl im sauren pH-Bereich bei alaunhaltigen Papieren als auch im neutralen bis schwach alkalischen pH-Bereich bei alaunfreien sowie kreidehaltigen Papieren eingesetzt werden können und eine ausgezeichnete Leimungswirkung ergeben.

Weiterhin werden mit dieser Erfindung neue Polymerisate bereitgestellt, die verschiedene vorteilhafte Anwendungsmöglichkeiten haben.

Die Erfindung betrifft in einem Aspekt Polymerisate, die dadurch erhältlich sind, daß man mindestens ein radikalisch polymerisierbares Monomer in Gegenwart eines Polymerisates der Formeln I und/oder II 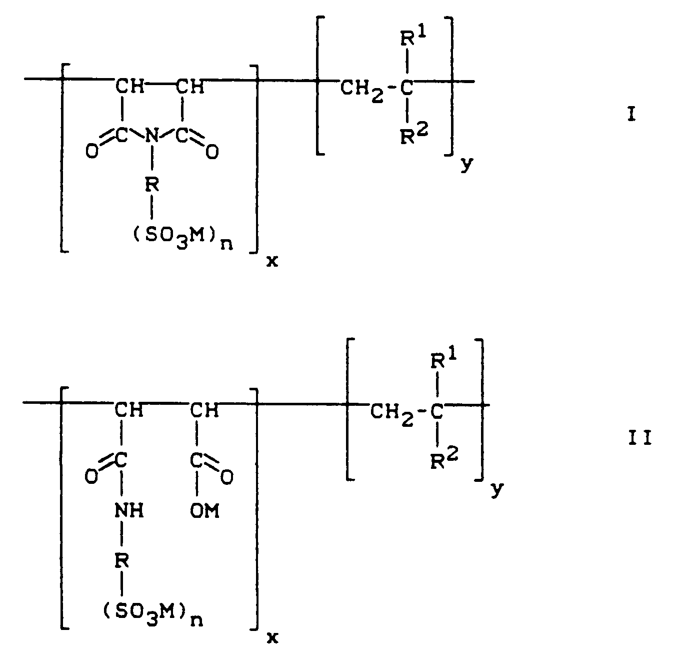
in denen
- M: ein kationbildender Rest, vorzugsweise H, Na, K, NH₄, R³NH₃,
- n: 1 oder 2
- R: einen aliphatischen Rest mit 1 bis 10 C-Atomen oder einen aromatischen Rest mit 1 bis 10 C-Atomen, bevorzugt einen von einem C₁-C₄-Alkan oder von Benzol, Methylbenzol oder Naphthalin abgeleiteten Rest
- R¹: H, CH₃,
- R²: H, C₁-C₆-Alkyl, vorzugsweise -CH₃, -C₂H₅, -C₄H₉, -CH₂-C(CH₃)₃, und Phenyl
- R³: Kohlenwasserstoffrest eines Amins bezeichnen und
- x, y: so gewählt werden, daß das Gewichtsmittel-Molekulargewicht (M̅_{w}) der Polymerisate I und II 5000 bis 500 000, vorzugsweise 10 000 bis 200 000, beträgt und das Verhältnis von x:y = 1:4 bis 1:1, bevorzugt 1:3 bis 1:1 ist, einer radikalischen Emulsionspolymerisation unterwirft.

R steht besonders bevorzugt für -CH₂-CH₂-.

Bei den Polymerisation der Formeln I und/oder II kann es sich um Gemische handeln, in denen vorzugsweise ≧80, besonders bevorzugt ≧90 Gew.-%, bezogen auf das Gemisch, Struktureinheiten I vorliegen.

Als radikalisch polymerisierbare Monomere eignen sich insbesondere Styrol (derivate), (Meth)Acrylate und/oder (Meth)Acrylnitril sowie Gemische dieser Monomeren. Beispielhaft seien genannt: Styrol, α-Methylstyrol, Acrylnitril, Vinylacetat, Ethylacrylat, Methylmethacrylat, n-Butylacrylat, i-Butylacrylat, 2-Ethylhexylacrylat, Methylmethacrylat, Methacrylsäureoxypropylester. Besonders bevorzugt werden n-Butylacrylat, Styrol und Acrylnitril eingesetzt. Ganz besonders bevorzugt kommt ein Gemisch zum Einsatz, das 20 bis 80, insbesondere 30 bis 70, Gew.-% n-Butylacrylat und 80 bis 20, insbesondere 70 bis 30, Gew.-% Acrylnitril enthält.

Die radikalische Emulsionspolymerisation der Monomeren in Gegenwart der Polymerisate I und/oder II, die als Emulgatoren und Pfropfsubstrate wirken können, erfolgt in üblicher Weise. Beispielsweise kann man dabei wie im folgenden beschrieben vorgehen:

Es wird eine radikalisch initiierte Copolymerisation der Monomeren(gemische) in Gegenwart wäßriger Lösungen der polymeren Emulgatoren I und/oder II durchgeführt. Als Radikalstarter eignen sich z.B. Kaliumpersulfat, Ammoniumpersulfat, organische Peroxide, organische Hydroperoxide, Wasserstoffperoxid sowie Redoxsysteme. Die Emulsionspolymerisation erfolgen bei Temperaturen zwischen 20 und 100°, bevorzugt 40 und 80°C. Die Menge der polymeren Emulgatoren beträgt, bezogen auf die zu polymerisierenden Monomeren, zwischen 5 und 30 Gew.-%, bevorzugt zwischen 7,5 und 20 Gew.-%.

Die Durchführung der Emulsionspolymerisation kann entweder auf die Weise erfolgen, daß man eine wäßrige Lösung des polymeren Emulgators vorlegt und dann die Monomeren und den Initiator über einen bestimmten Zeitraum, z.B. zwischen 2 und 6 Stunden, getrennt zudosiert, oder aber, daß man einen Teil des polymeren Emulgators in Wasser vorlegt und den Rest zusammen mit den Monomeren und dem Initiator in getrennten Mengenströmen ebenfalls über einen Zeitraum von 2 bis 6 Stunden zudosiert. Es kann aber auch so gearbeitet werden, daß über den gesamten Zeitraum der Polymerisation polymerer Emulgator, Initiator und Monomere getrennt und kontinuierlich zodosiert werden und nur eine bestimmte Menge an Wasser vorgelegt wird. Diese Art der Polymerisation eignet sich aber auch zur Durchführung nach einer batch-Fahrweise, d.h. polymerer Emulgator, Monomer(gemisch) und Initiator, werden zusammen vorgelegt, auf die gewünschte Polymerisationstemperatur erhitzt und zwischen 2 und 10 Std, bei dieser Temperatur gehalten.

Nach Beendigung der Polymerisationsreaktion auf die beispielhaft beschriebene Art ist eine feinteilige wäßrige Polymeremulsion mit einem mittleren Teilchendurchmesser zwischen 40 und 400 nm entstanden. Die Emulsion enthält neben Homo- und/oder Copolymerisation der zur Polymerisation eingesetzten Monomeren oder Monomergemische auch Anteile von Pfropfprodukten der Monomeren, die auf die polymeren Emulgatoren als Pfropfsubstrate aufgepfropft sind.

Gewünschtenfalls kann man die wäßrigen Polymeremulsionen in üblicher Weise zur Gewinnung der festen Polymerisate aufarbeiten.

Die erfindungsgemäßen Polymerisate können z.B. als filmbildende Materialien oder als Schlichtemittel für Fasern, insbesondere Glasfasern, verwendet werden. Vorzugsweise verwendet man sie jedoch in Form (von bei ihrer Herstellung anfallenden) wäßrigen Emulsionen zur Oberflächenleimung von Papier oder papierähnlichen Materialien, wie Karton oder Pappe.

Es handelt sich dabei um Oberflächenleimungsmittel mit schwach anionischem Charakter und geringer Neigung zur Schaumbildung, die ein breites Anwendungsspektrum besitzen. So können sie bei der Papierherstellung sowohl im sauren als auch im neutralen pH-Bereich eingesetzt werden. Sie führen bei alaunhaltigen, alaunfreien, vorgeleimten und holzhaltigen Papieren, die unterschiedliche Füllstoffe, wie Kaolin, Kreide oder TiO₂ enthalten können, zu einer ausgezeichneten Leimungswirkung.

Die Oberflächenleimungsmittel sind nach allen bei der Papierherstellung für die Oberflächenleimung gebräuchlichen Verarbeitungsmethoden, wie Einsatz in der Leimpresse oder Aufbringen durch Sprühverfahren, einsetzbar. Die Leimungsmittel können sowohl alleine als auch in Kombination mit wäßrigen Lösungen von Polymeren zur Anwendung kommen. Sie sind gegenüber schaumfördernden Einflüssen, z.B. ungünstigen apparativen Voraussetzungen an der Papiermaschine oder der Leimpresse, schaumbildenden Zustazstoffen in der Leimungsmittelflotte und hohen Härtegraden des bei der Papierherstellung verwendeten Wassers, unempfindlich. Neben ihrer guten Leimungswirkung stellt ihre geringe Neigung zur Schaumbildung einen weiteren Vorteil dar, da sie ohne Zusatz von Entschäumungsmitteln eingesetzt werden können. Die Leimungsmittel eignen sich entweder alleine oder in Kombination mit Leimungsmitteln, die zur Masse gegeben werden, für die Oberflächenleimung nahezu aller in der Praxis hergestellter Papierqualitäten, z.B. von alaunhaltigen, alaunfreien, mit Kaolin gefüllten, mit Kreide gefüllte, mit TiO₂ gefüllte, im neutralen und sauren pH-Bereich gefahrenen, ungeleimten, vorgeleimten, holzhaltigen und Altpapier enthaltenden Papieren.

Die neuen Leimungsmittel zeichnen sich besonders dadurch aus, daß sie im Vergleich zu Leimungsmitteln mit hoher Anionizität ein wesentlich breiteres Anwendungsspektrum besitzen. Während letztere nur auf alaumhaltigen, vorgeleimten und holzhaltigen Papieren eine gute Leimungswirkung aufweisen, zeigen die erfindungsgemäßen Produkte zusätzlich zu den genannten Papieren auch auf alaunfreien und kreidehaltigen Papieren ausgezeichnete Leimungseigenschaften. Zur Erzielung einer guten Leimung auf den beiden zuletzt genannten Papieren war bisher immer der Einsatz von Oberflächenleimungsmitteln mit kationischer Ladung notwendig.

Die Polymerisate I und II sind teilweise bekannt (siehe z.B. DE-OS 33 44 470). Ihre Herstellung kann nach oder in Analogie zu bekannten Verfahren erfolgen. Beispielsweise kann man wie folgt vorgehen: Copolymere aus Maleinsäureanhydrid oder Maleinsäure(halb)estern und Olefinen der Formel 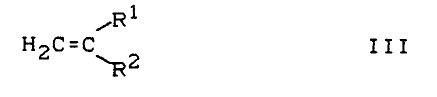
in der R¹, R² die zu den Formeln I und II angegebenen Bedeutungen haben, werden mit Aminosulfonsäuren bzw. Salzen der Formel

H₂N-R-(SO₃M)ₙ IV

in der
R, M und n die zu den Formeln I und II angegebenen Bedeutungen haben, in organischen Lösungsmitteln oder vorzugsweise in wäßriger Lösung bei Temperaturen bis 250°C, bevorzugt 100 bis 250°C, besonders bevorzugt 120 bis 200°C, und Reaktionszeiten von 5 bis 20 Stunden, bevorzugt 10 bis 15 Stunden, umgesetzt.

Als Copolymere kommen alternierend oder statistisch aufgebaute Copolymerisate aus MSA und z.B. Ethylen, Styrol, α-Methylstyrol, Propylen, Isobutylen, Buten-1 und Diisobutylen in Frage, wobei das molare Verhältnis zwischen Maleinsäureanhydrid und den zu copolymerisierenden Monomeren zwischen 1:1 und 1:4, vorzugsweise zwischen 1:1 und 1:3 liegt. Die Herstellung solcher Copolymerisate ist bekannt und ist z.B. in Houben-Weyl, Methoden der organischen Chemie, Bd. E XIV, Teil 2, Georg Thieme Verlag, Stuttgart, 1987, beschrieben.

Als Aminosulfonsäuren der Formel IV seien beispielhaft genannt: 2-Aminoethansulfonsäure, 2-Aminobenzolsulfonsäure, 3-Aminobenzolsulfonsäure, 4-Aminobenzolsulfonsäure, Aminonaphthalinsulfonsäuren, 4-Amino-1,3-benzoldisulfonsäure, 5-Amino-1,3-benzoldisulfonsäure und 2-Amino-1,4-benzoldisulfonsäure.

In einem weiteren Aspekt betrifft die Erfindung Polymerisate der Formeln 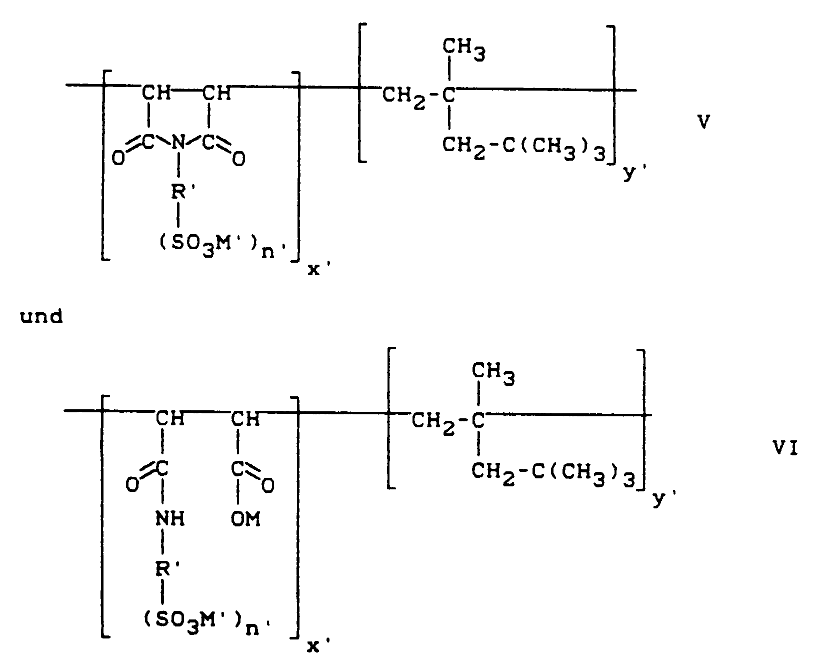
in denen
- M′: ein kationbildender Rest, vorzugsweise H, Na, K, NH₄, R⁴NH₃,
- n′: 1 oder 2
- R′: einen aliphatischen Rest mit 1 bis 10 C-Atomen, bevorzugt einen von einem C₁-C₄-Alkan abgeleiteten Rest, bevorzugt -CH₂-CH₂-,
- R⁴: den Kohlenwasserstoffrest eines Amins bezeichnen und
- x′, y′: so gewählt werden, daß das Gewichtsmittel-Molekulargewicht (M̅_{w}) der Polymerisate V und VI 5000 bis 500 000, vorzugsweise 10 000 bis 200 000, beträgt, wobei das Verhältnis von x′:y′ = 1:1,5 bis 1,5:1, bevorzugt 1:1,05 bis 1,05:1, ist.

Die neuen Polymerisate, die z.B. auf die oben angegebene Weise hergestellt werden, können z.B. als Emulgatoren zur Herstellung von wäßrigen Dispersionen und Emulsionen sowie als Zusätze zu Zementzubereitungen (Fluid-Loss-Additive in Tiefbohrzementschlämmen), z.B. nach der in der DE-OS 33 44 470 beschriebenen Anwendungsweise, verwendet werden. Besonders wichtig ist jedoch ihre Verwendung als polymere Emulgatoren bzw. Pfropfsubstrate zur Herstellung der erfindungsgemäßen Polymerisate aus radikalisch polymerisierbarer Monomeren.

Die Prozentangaben in den folgenden Beispielen beziehen sich stets auf das Gewicht.

### Beispiele

1) Herstellung des polymeren Emulgators I:
In einem 6-l-Edelstahlautoklaven wird ein Gemisch aus 450 g eines laternierenden Styrol/Maleinsäureanhydrid-Copolymerisats vom Mw. ca. 50 000, 776 g einer 42,2 gew.-%igen Lösung von 2-Aminoethansulfonsäure-Na-Salz in Wasser und 2661 g elektrolytfreiem Wasser vorgelegt. Nach 3maligem Spülen mit Stickstoff wird der Autoklav verschlossen und unter Rühren 10 Stunden lang auf 100°C erhitzt. Danach steigert man die Temperatur auf 180°C, rührt weitere 5 Stunden, erhöht schließlich auf 200°C und läßt nochmals 5 Stunden bei dieser Temperatur rühren. Nach dem Abkühlen auf Raumtemperatur erhält man eine klare wäßrige Lösung des polymeren Emulgators I mit einem Festgehalt von ca. 20 Gew.-%.
2) Herstellung des polymeren Emulgators II:
Die Darstellung des polymeren Emulgators II erfolgt wie unter 1) beschrieben unter Einsatz von folgendem Reaktionsgemisch:
420 g eines alternierenden Diisobutylen/Maleinsäureanhydrid-Copolymerisats vom M̅_{w} ca. 11 000, 697 g einer 42,2 gew.-%igen Lösung von 2-Aminoethansulfonsäure-Na-Salz in Wasser und 2346 g elektrolytfreies Wasser.
Am Ende der Reaktion erhält man eine wäßrige Lösung des polymeren Emulgators II mit einem Feststoffgehalt von 19,1 Gew.-%.
3) Herstellung des polymeren Emulgators III:
Die Darstellung des polymeren Emulgators III erfolgt wie unter 1) und 2) beschrieben unter Einsatz von folgendem Reaktionsgemisch:
606 g eines statistisch aufgebauten Copolymerisats aus Styrol und Maleinsäureanhydrid mit einem Maleinsäureanhydridgehalt von 33,5 Gew.-% und einem M̅_{w} von ca. 46 000, 618 g einer 48,2 gew.-%igen Lösung von 2-Aminoethansulfonsäure-Na-Salz in Wasser und 3294 g elektrolytfreies Wasser.
Nach Beendigung der Reaktion erhält man eine wäßrige Lösung des polymeren Emulgators III mit einem Feststoffgehalt von 18,8 Gew.-%.
4) Herstellung des polymeren Emulgators IV:
Die Darstellung des polymeren Emulgators IV erfolgt wie unter 3) beschrieben unter Einsatz von folgendem Reaktionsgemisch:
690 g eines statistisch aufgebauten Copolymerisats aus Styrol und Maleinsäureanhydrid mit einem Maleinsäureanhydridgehalt von 29,2 Gew.-% und einem M̅_{w} von ca. 120 000, 618 g einer 48,2 gew.-%igen Lösung von 2-Aminoethansulfonsäure, Na-Salz in Wasser sowie 3627 g elektrolytfreies Wasser.
Nach Beendigung der Reaktion und Abkühlung auf Raumtemperatur erhält man eine wäßrige Lösung des polymeren Emulgators IV mit einem Feststoffgehalt von 19,1 Gew.-%.
5) Herstellung der Leimungsmittelemulsion A:
Unter Rühren und Überleiten von Stickstoff werden in einem Dreihalskolben, der mit Rückflußkühler und zwei Tropftrichtern ausgerüstet ist, 102,6 g einer 19,5 gew.-%igen wäßrigen Lösung des polymeren Emulgators I in 528 g elektrolytfreiem Wasser vorgelegt und auf 65°C erhitzt. Bei dieser Temperatur gibt man zunächst eine Lösung von 200 mg K-Persulfat in 17,5 g Wasser sowie eine Mischung aus 13,75 g n-Butylacrylat und 11,25 g Acrylnitril zu und rührt eine Stunde. Danach werden gleichzeitig innerhalt von 3 Stunden bei 65°C die Lösungen 1) + 2) getrennt zugetropft:

| | | |
|---|---|---|
| Lösung 1): | 600 mg | K-Persulfat |
| | 52,5 g | Wasser |
| Lösung 2): | 41,25 g | n-Butylacrylat |
| | 33,75 g | Acrylnitril |

Nach beendeter Zugabe wird noch 2 Stunden bei 70° und 3 Stunden bei 80°C nachgerührt. Nach dem Abkühlen auf Raumtemperatur ist eine feinteilige Copolymeremulsion mit einem Feststoffgehalt von 14,8 Gew.-% entstanden, die direkt als solche zur Oberflächenleimung von Papier eingesetzt wird.
6) Herstellung der Leimungsmittelemulsion B:
In einem Dreihalskolben werden unter Rühren und Überleiten von Stickstoff 6,6 g der 19,1 gew.-%igen wäßrigen Lösung des polymeren Emulgators II und 374 g elektrolytfreies Wasser vorgelegt und auf 65°C erwärmt. Bei dieser Temperatur gibt man zunächst eine Lösung von 200 mg K-Persulfat in 17,5 g Wasser sowie eine Mischung aus 13,75 g n-Butylacrylat und 11,25 g Acrylnitril zu und rührt eine Stunde. Danach werden aus drei Tropftrichtern innerhalb von 3 Stunden die Lösungen 1) + 2) + 3) gleichzeitig, aber getrennt zugetropft.

| | | |
|---|---|---|
| Lösung 1): | 600 mg | K-Persulfat |
| | 52,5 g | Wasser |
| Lösung 2): | 41,25 g | n-Butylacrylat |
| | 33,75 g | Acrylnitril |
| Lösung 3): | 19,7 g | Lösung des polymeren Emulgators II (Festgehalt: 19,1 %) |
| | 130 g | Wasser |

Nach beendeter Zugabe wird noch 2 Stunden bei 70°C und 3 Stunden bei 80°C nachgerührt. Nach dem Abkühlen auf Raumtemperatur erhält man eine feinteilige Leimungsmittelemulsion mit einem Feststoffgehalt von 15,5 Gew.-%.
7) Herstellung der Leimungsmittelemulsion C:
In einem Dreihalskolben wird eine Mischung aus 50 g einer 20 gew.-%igen wäßrigen Lösung des polymeren Emulgators III und 513 g elektrolytfreiem Wasser vorgelegt und unter Rühren und Überleiten eines schwachen Stickstoffstromes auf 65°C erhitzt. Bei dieser Temperatur gibt man zunächst eine Lösung von 200 mg K-Persulfat in 17,5 g Wasser sowie eine Mischung aus 12,50 g n-Butylacrylat und 12,50 g Acrylnitril zu und rührt 1 Stunde. Danach tropft man gleichzeitig innerhalb von 3 Stunden bei 65°C aus zwei getrennten Tropftrichtern die Lösungen 1) und 2) zu:

| | | |
|---|---|---|
| Lösung 1): | 600 mg | K-Persulfat |
| | 52,5 g | Wasser |
| Lösung 2): | 37,5 g | n-Butylacrylat |
| | 37,5 g | Acrylnitril |

Nach Ende der Zugabe der Lösungen 1) und 2) wird noch 2 Stunden bei 70° und 3 Stunden bei 80°C nachgerührt. Nach Abkühlung auf Raumtemperatur erhält man die Leimungsmittelemulsion C mit einem Feststoffgehalt von 14,8 Gew.-%.
8) Herstellung der Leimungsmittelemulsion D:
Die Herstellung der Leimungsmittelemulsion D erfolgt auf gleiche Weise wie die der Emulsion C, mit dem Unterschied, daß hier als Vorlage 75 g der 19,1 %igen wäßrigen Lösung des polymeren Emulgators IV sowie 521 g elektrolytfreies Wasser verwendet werden. Nach Beendigung der Polymerisation erhält man die feinteilige Leimungsmittelemulsion D mit einem Festgehalt von ca. 14,3 %.

### Anwendungsbeispiele

Die Leimungswirkung der erfindungsgemäßen Leimungsmittel wurde auf fünf verschiedenen Papiersorten geprüft, welche folgende Zusammensetzung hatten:
a) Alaunfreies Papier:
   50 % Nadelholzzellstoff, 50 % Laubholzzellstoff, 9,5 % Clay-Asche, pH-Wert im Stoffauflauf: 7,2; Mahlgrad: 35° SR; Naßaufnahme in einer Laborleimpresse: ca. 85 %; Papiergewicht: 80 g/m².
b) Alaunhaltiges Papier:
   50 % Nadelholzzellstoff, 50 % Laubholzzellstoff, 1 % Alaun, 11,2 % Clay-Asche, pH-Wert im Stoffauflauf: 5,0; Mahlgrad: 35° SR; Naßaufnahme: ca. 80 %; Papiergewicht: 80 g/m².
c) Vorgeleimtes Papier:
   50 % Nadelholzzellstoff, 50 % Laubholzzellstoff, 1 % Al-Sulfat, 11,1 % Clay-Asche, 0,1 % Harzleim, pH-Wert im Stoffauflauf: 4,5 %; Naßaufnahme: ca. 70 %; Papiergewicht: 80 g/m².
d) Kreidehaltiges Papier:
   50 % gebleichter Birkensulfat, 50 % gebleichter Kiefernsulfat, 15 % Kreide, Mahlgrad: 35° SR, Naßaufnahme: 80 %; pH-Wert im Stoffauflauf: 7,5; Papiergewicht: 75 g/m².
e) Holzhaltiges Papier:
   40 % Nadelholzzellstoff, 60 % Holzschliff, 1 % Alaun, 14,1 % Clay-Asche, pH-Wert im Stoffauflauf: 4,5; Naßaufnahme: ca. 50 %; Papiergewicht: 75 g/m².

Die Leimung der Papiere erfolgte auf einer Laborleimpresse der Firma Mathis, Zürich, Schweiz, Type HF. Als Leimungsflotte wurde eine Lösung aus 5 Gew.-Teilen handelsüblicher Stärke sowie 0,15, 0,20, 0,26, 0,32 und 0,40 Teilen des zu prüfenden Leimungsmittels verwendet, die mit Wasser bis auf 100 Teile ergänzt wurde. Die Trocknung der oberflächengeleimten Papier erfolgte auf einem Trockenzylinder innerhalb einer Minute bei ca. 100°C. Vor der Leimungsprüfung wurden die Papiere 2 Stunden bei Raumtemperatur klimatisiert.

Zur Beurteilung des Leimungsgrades der oberflächengeleimten Papiere wurden die Cobb-Werte (nach DIN 53 132) bestimmt sowie Tintenschwimmproben (TSP) durchgeführt. Für die Tintenschwimmproben wurden die Papiere in Streifen von 3 cm Breite und 3 cm Länge geschnitten und bei 22°C auf blaue Prüftinte (DIN 53 126) gelegt. Nach für die einzelnen Papiersorten unterschiedlichen Prüfzeiten wurden die Probenpapiere von der Tinte genommen, rückseitig auf Löschpapier abgequetscht und nach 5 Minuten visuell beurteilt. Zur qualitativen Bestimmung der Tintendurchdringnung durch das Papier und somit des Leimungsgrades wurde eine Bewertung mit den Zahlen 1 bis 5 durchgeführt, wobei die Zahlen im einzelnen bedeuten:

| | |
|---|---|
| 1 | kein Tintendurchschlag |
| 2 | 5 bis 10 % Tintendurchschlag |
| 3 | 10 bis 20 % Tintendurchschlag |
| 4 | ca. 50 % Tintendurchschlag |
| 4,5^{*)} | ca. 90 % Tintendurchschlag |
| 5 | 100 % Tintendurchschlag |

| | |
|---|---|
| ^{*)} Außerdem können noch weitere Zwischenwerte herangezogen werden. | |

Die folgenden Tabellen zeigen die Wirksamkeit der erfindungsgemäßen Papieroberflächenleimungsmittel A-F auf verschiedenen Papiersorten.

### Anwendungsbeispiel 1

Es wurden 5 verschiedene Papiersorten mit der Leimungsmittelemulsion A ("LM A") in der Oberfläche geleimt. Tabelle 1 gibt dabei die gemessenen Cobb-Werte und Tabelle 2 die gefundenen Ergebnisse der Tintenschwimmproben wieder:

**Tabelle 1**

| Papiersorte | Cobb-Wert (60˝) i. g/m² bei Zusatz von "LM A" | | | |
|---|---|---|---|---|
| | 0,20 % | 0,26 % | 0,32 % | 0,40 % |
| Alaunfrei | 23,7 | 22,4 | 22,2 | 21,3 |
| Kreidehaltig | 24,9 | 23,1 | 23,0 | 20,4 |
| Alaunhaltig | 21,6 | 20,8 | 20,8 | 19,5 |
| Vorgeleimt | 19,8 | 19,7 | 19,7 | 19,3 |
| Holzhaltig | 19,3 | 19,0 | 19,0 | 18,4 |

**Tabelle 2**

| Papiersorte | Zeit | | TSP bei Zusatz von "LM A" | | |
|---|---|---|---|---|---|
| | | 0,20 | % 0,26 % | 0,32 % | 0,40 % |
| Alaunfrei | 20′ | 2,5 | 2,5 | 2 | 1,5 |
| Kreidehaltig | 20′ | 2 | 2 | 1,5 | 1,5 |
| Alaunhaltig | 20′ | 2,5 | 2,5 | 2 | 2 |
| Vorgeleimt | 3′ | 3,5 | 3 | 3 | 3 |
| Holzhaltig | 5' | 3,5 | 3,5 | 3 | 3 |

### Anwendungsbeispiel 2

In diesem Beispiel wurden ebenfalls 5 verschiedene Papiersorten mit dem Leimungsmittel B ("LM B") in der Oberfläche geleimt. Tabelle 3 gibt die gemessenen Cobb-Werte und Tabelle 4 die Beurteilungen der Tintenschwimmproben wieder:

**Tabelle 3**

| Papiersorte | Cobb-Wert (60˝) i. g/m² bei Zusatz von "LM B" | | | |
|---|---|---|---|---|
| | 0,20 % | 0,26 % | 0,32 % | 0,40 % |
| Alaunfrei | 23,8 | 23,6 | 23,1 | 21,8 |
| Kreidehaltig | 23,9 | 23,4 | 22,4 | 22,0 |
| Alaunhaltig | 22,1 | 21,6 | 20,9 | 19,8 |
| Vorgeleimt | 19,5 | 19,3 | 18,5 | 18,4 |
| Holzhaltig | 19,1 | 18,8 | 18,8 | 18,6 |

**Tabelle 4**

| Papiersorte | Zeit | TSP bei Zusatz von "LM B" | | | |
|---|---|---|---|---|---|
| | | 0,20 % | 0,26 % | 0,32 % | 0,40 % |
| Alaunfrei | 15' | 2 | 2 | 1,5 | 1,5 |
| Kreidehaltig | 20' | 2 | 1,5 | 1 | 1 |
| Alaunhaltig | 15' | 2,5 | 2 | 2 | 2 |
| Vorgeleimt | 3' | 3 | 3 | 2,5 | 2,5 |
| Holzhaltig | 3′ | 3,5 | 3,5 | 3 | 3 |

### Anwendungsbeispiel 3

Hier wurden alaunfreies und kreidehaltiges Papier mit 0,15 % des Leimungsmittels C in der Oberfläche geleimt. In Tabelle 5 sind die gefundenen anwendungstechnischen Ergebnisse zusammengestellt.

**Tabelle 5**

| Papiersorte | Cobb-Wert (60'') [g/m²] | TSP | |
|---|---|---|---|
| | | Zeit | Bewertung |
| Alaunfrei | 26,9 | 7′ | 2,5 |
| Alaunhaltig | 21,5 | 12′ | 2 |

### Anwendungsbeispiel 4

In Tabelle 6 sind die Ergebnisse wiedergegeben, die mit der Leimungsmittelemulsion D (Einsatz: 0,15 % Leimungsmittelwirkstoff) ebenfalls auf alaunfreiem und kreidehaltigen Papier erhalten wurden:

**Tabelle 6**

| Papiersorte | Cobb-Wert (60'') [g/m²] | TSP | |
|---|---|---|---|
| | | Zeit | Bewertung |
| Alaunfrei | 25,8 | 15′ | 2 |
| Alaunhaltig | 22,4 | 12′ | 2 |

Alle vier Anwendungsbeispiele zeigen deutlich, daß die erfindungsgemäßen Leimungsmittel auf Papieren unterschiedlicher Zusammensetzung ein ausgezeichnetes Leimungsverhalten aufweisen.

Außerdem haben die erfindungsgemäßen Produkte nur eine geringe Neigung zur Schaumbildung, wie Messungen ihres Schaumverhaltens zeigen.

### Anwendungsbeispiel 5

Am Beispiel der Leimungsmittel B und C wird die Messung des Schaumverhaltens beschrieben.

0,4 Gew.-% Wirksubstanz werden in einer Leimungsflotte aus 5 Gew.-% handelsüblicher Stärke (Perfectamyl A 4692®) gelöst und auf 60°C erwärmt. 200 ml dieser Leimungsflotte werden aus einem Aluminiumgefäß, das an seiner Unterseite eine kreisförmige Öffnung von 4 mm Durchmesser (Ford-Becher) besitzt, aus einer Höhe von 60 cm in ein graduiertes Becherglas im freien Fall geleitet. Das Volumen in ml des sich über der Flüssigkeitsoberfläche bildenden Schaumes wird einmal sofort sowie nach 1-minütigem Stehen an der Luft bestimmt. Der erste Wert gibt dabei Aufschluß über die Schaumbildungstendenz des Leimungsmittels und der zweite Wert über die Schnelligkeit des Schaumabbaus bzw. über dessen Stabilität. Die mit den Oberflächenleimungsmitteln erhaltenen Prüfergebnisse sind in Tabelle 7 zusammengefaßt:

**Tabelle 7**

| Leimungsmittel | Schaumvolumen i. ml | |
|---|---|---|
| | sofort | nach 1 Minute |
| B | 90 | 40 |
| C | 80 | 40 |

Die gefundenen Ergebnisse ziegen deutlich, daß die geprüften Produkte mit gemessenen Schaumvolumina <100 ml nur eine sehr geringe Tendenz zur Schaumbildung aufweisen.

## Patentansprüche

1. Polymerisate, die dadurch erhältlich sind, daß man mindestens ein radikalisch polymerisierbares Monomer in Gegenwart eines Polymerisats der Formeln I und/oder II 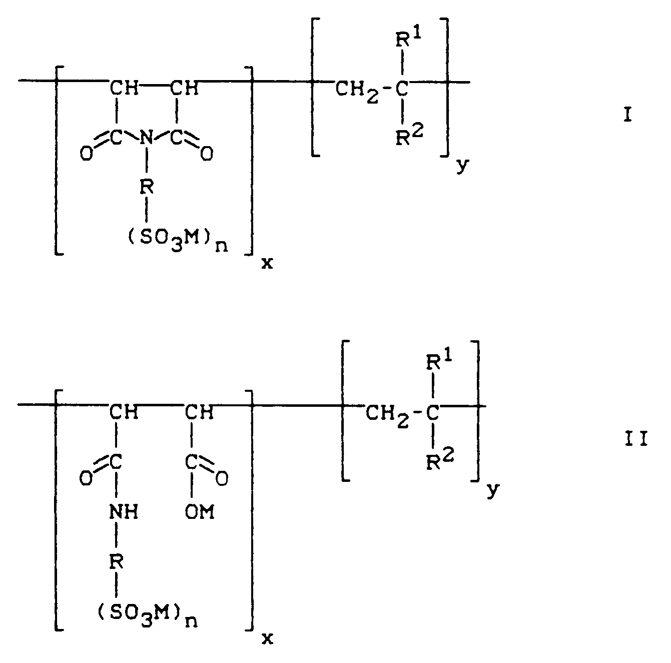 in denen
M ein kationbildender Rest, vorzugsweise H, Na, K, NH₄, R³NH₃,
n 1 oder 2
R einen aliphatischen Rest mit 1 bis 10 C-Atomen oder einen aromatischen Rest mit 1 bis 10 C-Atomen, bevorzugt einen von einem C₁-C₄-Alkan oder von Benzol, Methylbenzol oder Naphthalin abgeleiteten Rest
R¹ H, -CH₃,
R² H, C₁-C₆-Alkyl, vorzugsweise -CH₃, -C₂H₅, -C₄H₉, -CH₂-C(CH₃)₃, und Phenyl
R³ Kohlenwasserstoffrest eines Amins bezeichnen und
x, y so gewählt werden, daß das Gewichtsmittel-Molekulargewicht (M̅_{w}) der Polymerisate I und II 5000 bis 500 000, vorzugsweise 10 000 bis 200 000, beträgt und das Verhältnis von x:y = 1:4 bis 1:1, bevorzugt 1:3 bis 1:1 ist, einer radikalischen Emulsionspolymerisation unterwirft.

2. Polymerisate gemäß Anspruch 1, die dadurch erhältlich sind, daß man ein Polymerisat der Formeln I und/oder II einsetzt, bei denen R für -CH₂-CH₂-steht.

3. Polymerisate gemäß Anspruch 1 oder 2, die dadurch erhältlich sind, daß man ein Gemisch der Polymerisate I und II, in dem vorzugsweise ≧80, besonders bevorzugt ≧90 Gew.-%, bezogen auf das Gemisch, Struktureinheiten I vorliegen, einsetzt.

4. Polymerisate gemäß einem oder mehreren der Ansprüche 1 bis 3, die dadurch erhältlich sind, daß man als radikalisch polymerisierbare Monomere Styrol(derivate), (Meth)Acrylate und/oder (Meth)Acrylnitril verwendet.

5. Polymerisate gemäß einem oder mehreren der Ansprüche 1 bis 4, die dadurch erhältlich sind, daß man mindestens ein radikalisch polymerisierbares Monomer aus der Reihe Styrol, α-Methylstyrol, Acrylnitril, Vinylacetat, Ethylacrylat, Methylmethacrylat, n-Butylacrylat, i-Butylacrylat, 2-Ethylhexylacrylat, Methylmethacrylat, Methacrylsäureoxypropylester einsetzt.

6. Polymerisate gemäß einem oder mehreren der Ansprüche 1 bis 5, die dadurch erhältlich sind, daß man ein Monomerengemisch aus 20 bis 80 Gew.-%, insbesondere 30 bis 70 Gew.-%, n-Butylacrylat und 80 bis 20 Gew.-%, insbesondere 70 bis 30 Gew.-%, Acrylnitril einsetzt.

7. Polymerisate gemäß einem oder mehreren der Ansprüche 1 bis 6, dadurch gekennzeichnet, daß man 5 bis 30 Gew.-%, bevorzugt 7,5 bis Gew.-%, bezogen auf die zu polymerisierenden Monomeren, des polymeren Emulgators einsetzt.

8. Polymerisate gemäß einem oder mehreren der Ansprüche 1 bis 7, dadurch erhältlich, daß die Polymerisation der Monomeren durch Radikalstarter bei Temperaturen von 20 bis 100°C initiiert wird.

9. Verwendung der Polymerisate gemäß einem oder mehreren der Ansprüche 1 bis 8 zur Oberflächenleimung von Papier oder papierähnlichen Materialien.

10. Polymerisate der Formeln 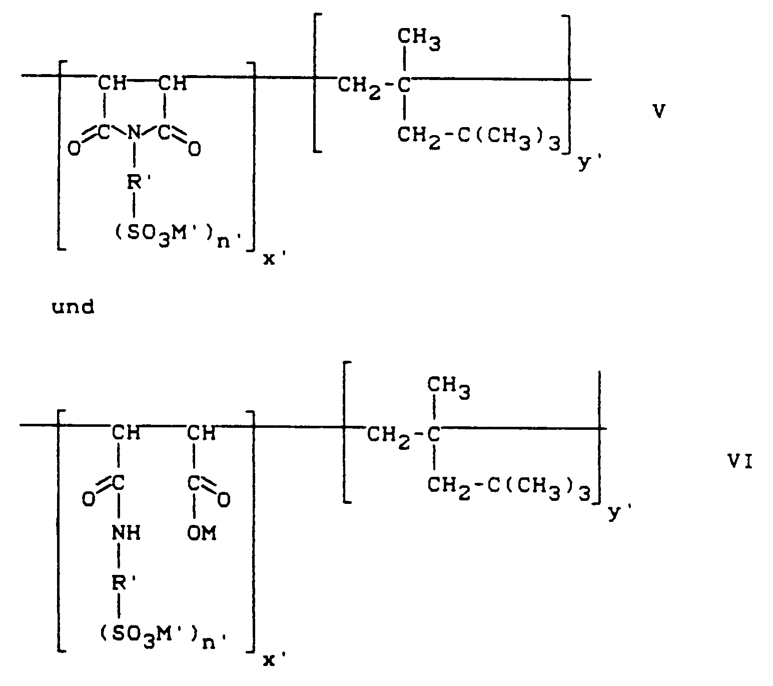 in denen
M′ ein kationbildender Rest, vorzugsweise H, Na, K, NH₄, R⁴NH₃,
n′ 1 oder 2
R′ einen aliphatischen Rest mit 1 bis 10 C-Atomen, bevorzugt einen von einem C₁-C₄-Alkan abgeleiteten Rest, besonders bevorzugt -CH₂-CH₂-,
R⁴ den Kohlenwasserstoffrest eines Amins bezeichnen und
x′, y′ so gewählt werden, daß das Gewichtsmittel-Molekulargewicht der Polymerisate V und VI 5000 bis 500 000, vorzugsweise 10 000 bis 200 000, beträgt, wobei das Verhältnis von x′:y′ = 1:1,5 bis 1,5:1, bevorzugt 1:1,05 bis 1,05:1, ist.

## Claims

1. Polymers obtainable by subjecting at least one free-radically polymerizable monomer to a free-radical emulsion polymerization in the presence of a polymer of the formulae I and/or II 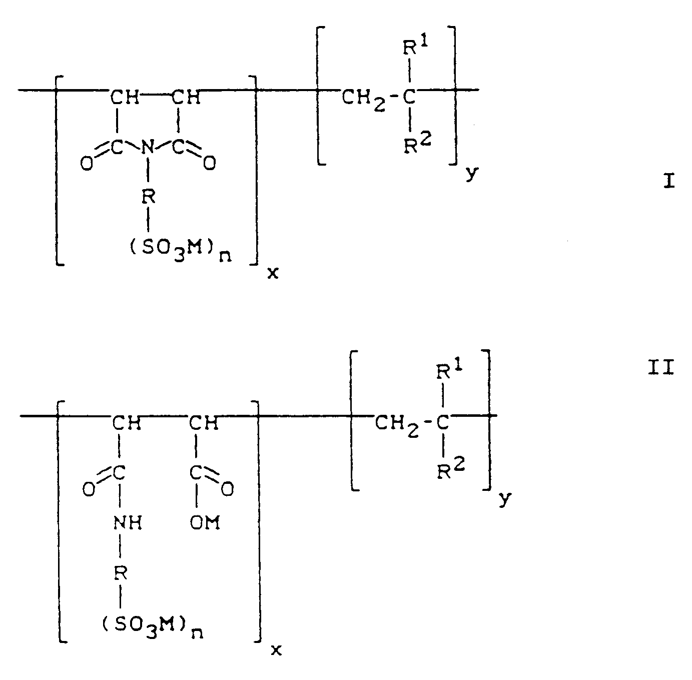 in which
M signifies a cation-forming radical, preferably H, Na, K, NH₄ or R³NH₃,
n signifies 1 or 2,
R signifies an aliphatic radical having 1 to 10 carbon atoms or an aromatic radical having 1 to 10 carbon atoms, preferably a radical derived from a C₁-C₄-alkane or from benzene, methylbenzene or naphthalene.
R¹ signifies H or -CH₃,
R² signifies H, C₁-C₆-alkyl, preferably -CH₃, -C₂H₅, -C₄H₉ or -CH₂-C(CH₃)₃, or phenyl,
R³ signifies a hydrocarbon radical of an amine and
x and y are selected in such a manner that the weight average of the molecular weight (M̅_{w}) of the polymers I and II is 5,000 to 500,000, preferably 10,000 to 200,000, and the ratio of x:y is 1:4 to 1:1, preferably 1:3 to 1:1.

2. Polymers according to Claim 1, obtainable by using a polymer of the formulae I and/or II in which R represents -CH₂-CH₂-.

3. Polymers according to Claim 1 or 2, obtainable by using a mixture of polymers I and II in which preferably ≧80, particularly preferably ≧90, % by weight, relative to the mixture, of structural units I are present.

4. Polymers according to one or more of Claims 1 to 3, obtainable by using styrene (derivatives), (meth)acrylates and/or (meth)acrylonitrile as the free-radically polymerizable monomer.

5. Polymers according to one or more of Claims 1 to 4, obtainable by using at least one free-radically polymerizable monomer from styrene, α-methylstyrene, acrylonitrile, vinyl acetate, ethyl acrylate, methyl methacrylate, n-butyl acrylate, i-butyl acrylate, 2-ethylhexyl acrylate and hydroxypropyl methacrylate.

6. Polymers according to one or more of Claims 1 to 5, obtainable by using a monomer mixture comprising 20 to 80% by weight, in particular 30 to 70% by weight, of n-butyl acrylate and 80 to 20% by weight, in particular 70 to 30% by weight, of acrylonitrile.

7. Polymers according to one or more of Claims 1 to 6, characterized in that 5 to 30% by weight, preferably 7.5 to 30% by weight, relative to the monomers to be polymerized, of the polymeric emulsifier are used.

8. Polymers according to one or more of Claims 1 to 7, obtainable by initiating the polymerization of the monomers by means of free-radical initiators at temperatures of 20 to 100°C.

9. Use of the polymers according to one or more of Claims 1 to 8 for surface-sizing paper or paper-like materials.

10. Polymers of the formulae 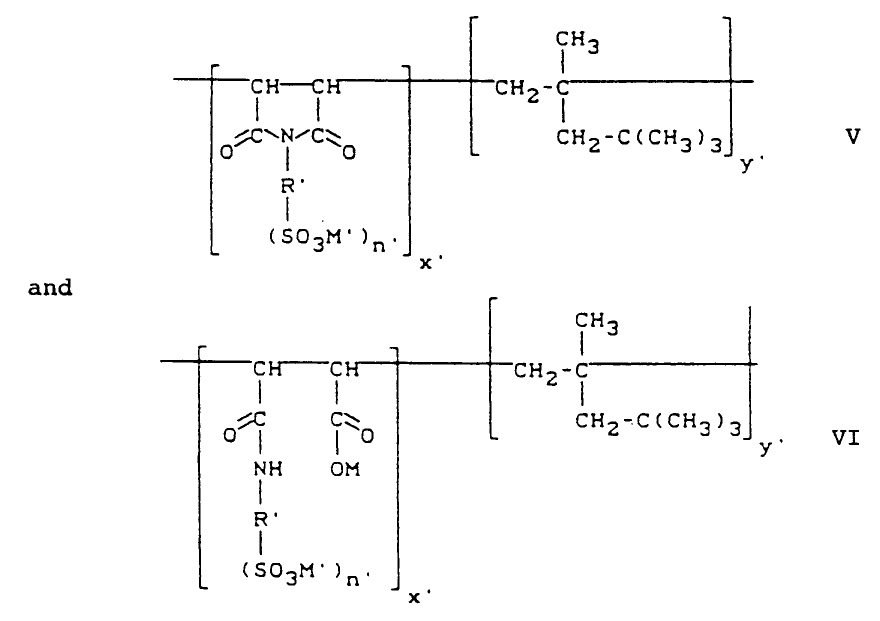 in which
M' signifies a cation-forming radical, preferably H, Na, K, NH₄ or R⁴NH₃,
n' signifies 1 or 2,
R' signifies an aliphatic radical having 1 to 10 carbon atoms, preferably a radical derived from a C₁-C₄-alkane, particularly preferably -CH₂-CH₂-,
R⁴ signifies the hydrocarbon radical of an amine and
x' and y' are selected such that the weight average of the molecular weight of polymers V and VI is 5,000 to 500,000, preferably 10,000 to 200,000, the ratio of x':y' being 1:1.5 to 1.5:1, preferably 1:1.05 to 1.05:1.

## Revendications

1. Polymères obtenus en soumettant à polymérisation radicalaire en émulsion au moins un monomère apte à la polymérisation radicalaire en présence d'un polymère de formules I et/ou II : 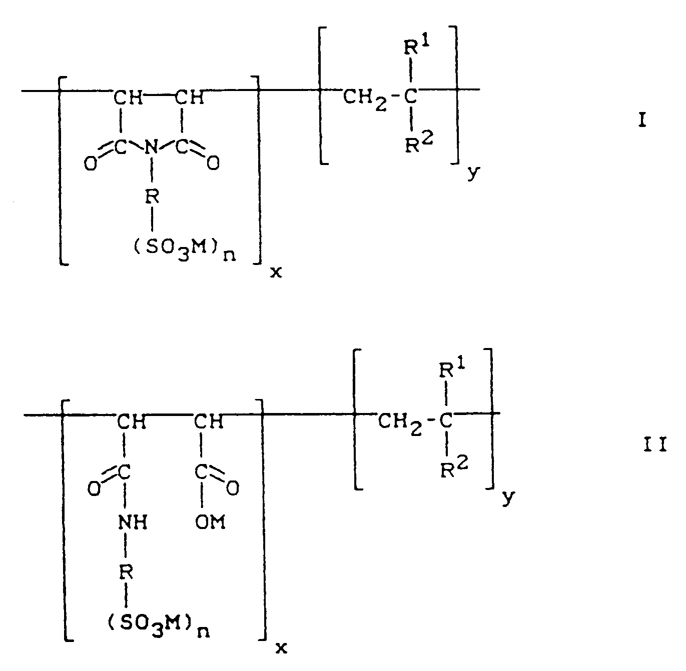 dans lesquelles
M représente un cation, de préférence H, Na, K, NH₄, R³NH₃,
n est égal à 1 ou 2,
R représente un radical aliphatique en C₁-C₁₀ ou un radical aromatique en C₁-C₁₀, de préférence un radical dérivé d'un alcane en C₁-C₄ ou du benzène, du méthylbenzène ou du naphtalène,
R¹ représente H, -CH₃,
R² représente H, un groupe alkyle en C₁-C₆, de préférence -CH₃, -C₂H₅, -C₄H₉, -CH₂-C(CH₃)₃ ou un groupe phényle,
R³ représente un radical hydrocaboné d'une amine et
x et y sont choisis en sorte que le poids moléculaire moyen, moyenne en poids (M̅_{w}) des polymères I et II, se situe entre 5 000 et 500 00, de préférence 10 000 et 200 000 et que le rapport x : y soit de 1 : 4 à 1 : 1, de préférence 1 : 3 à 1 : 1.

2. Polymères selon la revendication 1, obtenus à partir d'un polymère de formules I et/ou II pour lequel R représente -CH₂-CH₂-.

3. Polymères selon la revendication 1 ou 2, obtenus au départ d'un mélange des polymères I et II dans lequel il y a de préférence 80 % en poids ou plus, plus spécialement 90% en poids ou plus, par rapport au mélange, de motifs de structure I.

4. Polymères selon une ou plusieurs des revendications 1 à 3, obtenus par utilisation, en tant que monomères aptes à la polymérisation radicalaire, du styrène et de ses dérivés, de (méth)acrylates et/ou de (méth)acrylonitrile.

5. Polymères selon une ou plusieurs des revendications 1 à 4, obtenus en utilisant au moins un monomère apte à la polymérisation radicalaire pris dans le groupe formé par le styrène, l'α-méthylstyrène, l'acrylonitrile, l'acétate de vinyle, l'acrylate d'éthyle, le méthacrylate de méthyle, l'acrylate de n-butyle, l'acrylate d'isobutyle, l'acrylate de 2-éthylhexyle, le méthacrylate de méthyle, le méthacrylate d'hydroxypropyle.

6. Polymères selon une ou plusieurs des revendications 1 à 5, obtenus en utilisant un mélange de monomères consistant en 20 à 80 % en poids, plus spécialement 30 à 70 % en poids d'acrylate de n-butyle, et 80 à 20 % en poids, plus spécialement 70 à 30 % en poids d'acrylonitrile.

7. Polymères selon une ou plusieurs des revendications 1 à 6, caractérisés en ce que l'on utilise l'agent émulsionnant polymère en proportions de 5 à 30 %, de préférence de 7,5 à 30 % du poids des monomères à polymériser.

8. Polymères selon une ou plusieurs des revendications 1 à 7, obtenus en déclenchant la polymérisation des monomères par des inducteurs radicalaires à des températures de 20 à 100°C.

9. Utilisation des polymères selon une ou plusieurs des revendications 1 à 8 pour le collage en surface du papier ou de matières analogues au papier.

10. Polymères de formules : 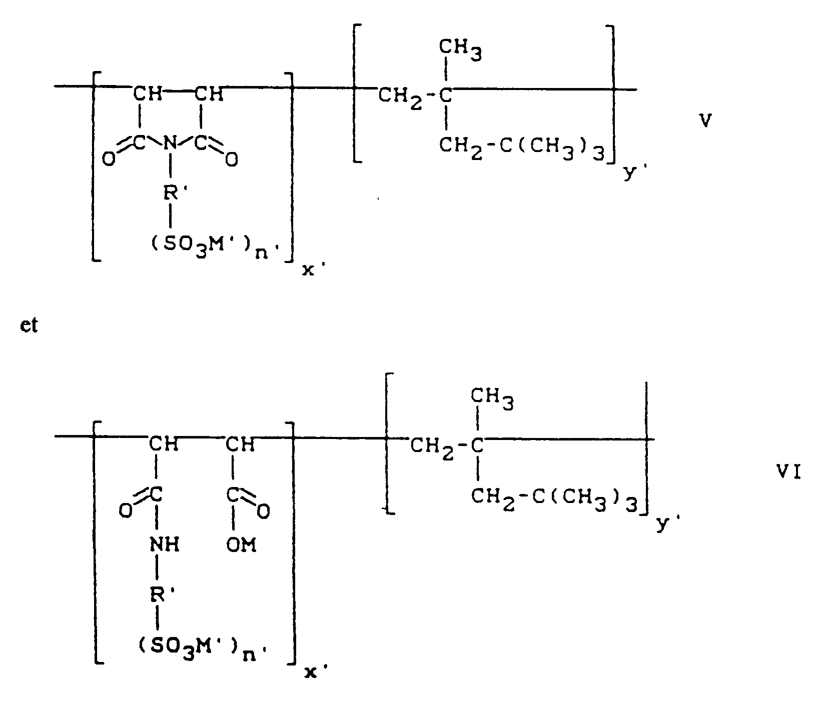 dans lesquelles
M' représente un cation, de préférence H, Na, K, NH₄, R⁴NH₃,
n' est égal à 1 ou 2,
R' représente un radical aliphatique en C₁-C₁₀, de préférence un radical dérivé d'un alcane en C₁-C₄, tout spécialement un radical -CH₂-CH₂-,
R⁴ représente le radical hydrocarboné d'une amine et
x' et y' sont choisis en sorte que le poids moléculaire moyen, moyenne en poids des polymères V et VI, se situe entre 5 000 et 500 000, de préférence 10 000 et 200 000, et que le rapport x' : y' = 1 : 1,5 à 1,5 : 1, de préférence 1 : 1,05 à 1,05 : 1.
